(19) **Europäisches Patentamt**
**European Patent Office**
**Office européen des brevets**

(11) **EP 2 172 933 B1**

(12) **FASCICULE DE BREVET EUROPEEN**

(45) Date de publication et mention
de la délivrance du brevet:
**26.10.2011 Bulletin 2011/43**

(51) Int Cl.:
**G11B 7/0045** (2006.01)  **G11B 7/135** (2006.01)
**G11B 7/013** (2006.01)

(21) Numéro de dépôt: **09165588.6**

(22) Date de dépôt: **15.07.2009**

(54) **Dispositif d'enregistrement de données graphiques sur un support**

Vorrichtung zur Aufzeichnung von grafischen Daten auf einem Medium

Apparatus for recording graphical data on a medium

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.07.2008 FR 0855080**

(43) Date de publication de la demande:
**07.04.2010 Bulletin 2010/14**

(73) Titulaire: **Commissariat à l'Énergie Atomique et aux Énergies Alternatives**
**75015 Paris (FR)**

(72) Inventeur: **Martinez, Christophe**
**38100, GRENOBLE (FR)**

(74) Mandataire: **Ilgart, Jean-Christophe et al**
**BREVALEX**
**95 rue d'Amsterdam**
**75378 Paris Cedex 8 (FR)**

(56) Documents cités:
**EP-A- 1 310 950     US-A1- 2005 046 817**
**US-B1- 6 442 296**

**Description**

**DOMAINE TECHNIQUE**

La présente invention concerne les techniques d'enregistrement de données graphiques sur un support. Les données graphiques pouvant être : des images, des photographies, des documents, des tableaux. Une donnée graphique peut être en noir et blanc ou en couleurs. Si elle est en noir et blanc, elle comporte une pluralité niveaux de gris. Si elle est en couleurs, elle comporte plusieurs demi-teintes de couleurs. Dans la présente demande de brevet on va également utiliser cette expression « niveau de gris », mais dans ce cas, cela signifie « demi-teinte de couleur ». Elle propose un dispositif d'enregistrement de données graphiques, un procédé d'enregistrement de données graphiques ainsi qu'un dispositif d'enregistrement et de lecture des données graphiques enregistrées par le procédé d'enregistrement.

**ÉTAT DE LA TECHNIQUE ANTÉRIEURE**

Le problème de la sauvegarde et de la conservation des données graphiques est un problème ancien qui doit satisfaire à plusieurs critères. Tout d'abord l'un des enjeux est le gain d'espace : il s'agit de réduire, physiquement parlant l'espace attribué à la conservation des données graphiques. Ensuite la sauvegarde doit permettre de reconstruire, au cours d'une étape de lecture, à partir des données graphiques enregistrées, des données graphiques de manière à ce qu'elles soient les plus proches possibles des données graphiques originales que l'on a enregistrées. De plus, le procédé se doit d'être rapide en enregistrement et/ou en lecture. Enfin les données graphiques enregistrées doivent pouvoir être utilisables longtemps après l'écriture sans se dégrader.

Dans le brevet US 3 319 518 il est proposé une technique de conservation de données graphiques dans laquelle les données graphiques sont enregistrées sur un support photosensible de taille réduite. Il s'agit d'un microfilm. Cette solution reste très limitée dans la mesure où la capacité de stockage reste faible : les données graphiques sont réduites seulement d'un facteur 25. Ensuite le post-traitement chimique lié à la technique de conservation impose un délai d'écriture long, et est limité seulement au support photosensible.

Une amélioration est apportée dans le brevet US 6 442 296. Les données graphiques sont inscrites point par point à l'aide d'un laser sur un support de type disque optique. Cette méthode reste peu adaptée aux exigences de la sauvegarde de données graphiques, dans la mesure où le support reste inscriptible même après l'enregistrement.

Le brevet européen EP 1 310 950 A2 propose l'enregistrement de données graphiques sur un support photosensible. Elle utilise pour cela la technique de champs proche pour enregistrer des données graphiques avec un facteur de réduction. Les données graphiques sur le support ont une taille caractéristique de 500 $\mu$m. Cette technique reste cependant limitée à des supports de type disques optiques photosensibles.

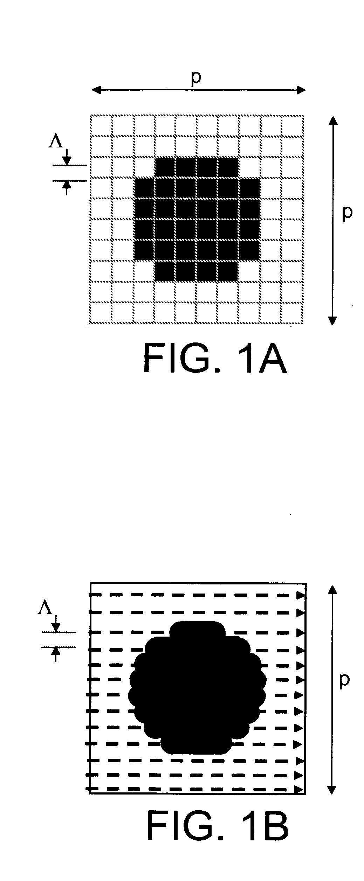

La figure 1A montre un motif globalement circulaire numérisé sur une grille carrée lors d'une étape de lithographie. L'effet de numérisation ne permet pas d'obtenir un motif circulaire de bonne résolution. Par ailleurs l'incrémentation de la taille du motif se fait par saut de valeur égale à celle du pixel élémentaire. Pour un nombre de pixel donné la gamme de taille disponible est donc limitée. Ce type de figure correspond typiquement à la fabrication d'un motif à partir d'un système de projection basé sur une matrice image de type Modulateur Spatial de Lumière-Les techniques de lithographie peuvent actuellement permettre la fabrication de motifs sur la base de forme plus complexe (assemblage de losange) mais la limitation liée à l'incrémentation des tailles reste similaire.

La figure 1B reprend le principe précédent dans le cas d'une écriture par balayage d'un faisceau laser. La résolution sur la forme du motif est donnée cette fois ncn pas par la taille du pixel élémentaire mais par le pas de balayage successif du faisceau.

La demande de brevet US 2005/046817 (Wolfe et al.) décrit un dispositif d'enregistrement de données graphiques sur un support avec un faisceau laser auquel est sensible le support, ce faisceau laser projetant un spot sur le support.

**EXPOSÉ DE L'INVENTION**

La présente invention a pour but de proposer une solution aux problèmes de la sauvegarde des données graphiques.

Notamment elle propose une solution qui tout d'abord permet d'inscrire très rapidement, contrairement aux modes de réalisations antérieurs où il fallait effectuer plusieurs passages du laser pour inscrire le motif. En effet, la solution proposée minimise le nombre de passage d'un faisceau laser écrivant sur un support, puisqu'elle permet d'inscrire par un passage unique du faisceau laser, un motif en entier.

Un autre but de l'invention est de proposer d'enregistrer les données graphiques sous un format physique analogique de taille réduite qui ne pose pas de problèmes d'adaptions des formats de lecture, même longtemps après l'enregistrement.

Un autre but de l'invention est de proposer d'enregistrer des données graphiques de manière fiable et viable commercialement.

Encore un autre but, est de proposer un procédé d'enregistrement adaptable à tous types de supports, c'est-à-dire de formes géométriques variables, planes, circulaires, cylindriques, mais aussi de sensibilités différentes ; ils peuvent être indifféremment sensibles à l'intensité lumineuse instantanée, comme c'est le cas des matériaux thermosensibles, ou sensible à l'exposition, ou dose, comme c'est le cas des matériaux photosensibles.

Pour atteindre ces objectifs de performance la présente invention propose un dispositif d'enregistrement de données graphiques sur un support, dans lequel chaque donnée graphique possède des pixels pouvant prendre plusieurs niveaux de gris. Il comporte un laser produisant un faisceau laser auquel est sensible le support comme exposé dans la revendication 1. Ce faisceau laser projette un spot sur le support. Le laser est animé d'un mouvement de balayage relatif par rapport au support lors de l'enregistrement. Selon l'invention il comporte également des moyens de conversion du niveau de gris de chaque pixel en une taille de motif à enregistrer sur le support, des moyens pour mettre en forme le faisceau laser de manière à ce que le spot projeté sur le support soit oblong et présente une dimension dans la direction de balayage inférieure à une dimension dans une direction sensiblement perpendiculaire à la direction de balayage, et des moyens de réglage de la taille du motif agissant sur l'allumage et l'extinction du laser et/ou la puissance du faisceau laser.

Ainsi au lieu d'utiliser un dispositif conventionnel d'enregistrement, dans lequel le faisceau laser balaye plusieurs fois le support pour inscrire le motif dans une maille, la présente invention propose un dispositif d'enregistrement dans lequel le faisceau laser effectue un passage unique au dessus de la maille pour inscrire le motif, le motif inscrit ayant une taille ajustable en jouant d'une part sur la puissance du faisceau laser et/ou sur la durée d'allumage du laser. Chaque motif correspond à un pixel de la donnée graphique à enregistrer, la taille du motif étant corrélée au niveau de gris du pixel.

Dans une variante de l'invention, les moyens pour mettre en forme le faisceau comportent un dispositif de focalisation placé en aval du lasser.

Selon une caractéristique de l'invention, les moyens pour mettre en forme le faisceau laser peuvent comporter un télescope cylindrique à au moins deux lentilles cylindriques de focales différentes, placé en aval du laser et en amont du dispositif de focalisation. De cette manière il est possible d'obtenir un spot oblong sans perdre une partie de la puissance du faisceau.

Suivant cette caractéristique au moins une des lentilles cylindriques est interchangeable. Ce qui permet de travailler avec plusieurs types de support.

Selon une autre variante, les moyens pour mettre en forme le faisceau laser peuvent comporter un obturateur placé en aval du laser et du dispositif de focalisation.

Selon encore une autre variante, les moyens pour mettre en forme le faisceau laser peuvent être un élément aberrant inclus dans le dispositif de focalisation.

Avantageusement, le dispositif d'enregistrement peut comporter, en outre, des moyens d'asservissement de la position des moyens de mise en forme par rapport au support, afin d'optimiser l'enregistrement.

Les moyens de réglage de la taille du motif peuvent comporter des moyens de modulation du faisceau laser. En effet ces moyens permettent d'obtenir une modification rapide dans la taille du motif, et par la même une vitesse d'enregistrement élevée.

Les moyens de conversion du niveau de gris de chaque pixel en une taille de motif à enregistrer comportent une table de conversion.

Selon l'invention chaque motif est inscrit dans une maille du support. Les moyens de réglage de la taille du motif règlent à la fois la durée d'allumage du laser et le début de l'allumage de manière à ce que chaque motif soit centré ou décentré dans la maille.

Lorsque le motif est décentré dans la maille, la taille du motif traduit l'amplitude d'une transformée du niveau de gris et son décentrement la phase de la transformée du niveau de gris. Ainsi une plus grande quantité d'informations peut être codée dans ce mode de réalisation.

Les moyens de réglage de la taille du motif et/ou les moyens de conversion suivant l'invention peuvent prendre aussi en compte la nature du support.

L'invention propose également un dispositif d'enregistrement et de lecture de données graphiques. Il comporte un dispositif d'enregistrement selon l'invention et un dispositif de lecture des données graphiques enregistrées par le dispositif d'enregistrement. Le dispositif de lecture comprend un laser destiné à irradier le support avec un faisceau laser et un dispositif optique de collecte du faisceau ayant interagi avec le support. Les moyens de conversion du niveau de gris de chaque pixel en une taille de motif à enregistrer sur le support prennent en compte une réponse percussionnelle du dispositif optique de collecte.

L'invention propose aussi un procédé d'enregistrement laser de données graphiques sur un support sensible à un faisceau laser produit par le laser comme exposé dans la revendication 14. chaque donnée graphique possède des pixels pouvant prendre plusieurs niveaux de gris. Selon l'invention, on détermine pour chaque pixel de la donnée graphique une taille de motif à enregistrer sur le support. Cette taille est fonction du niveau de gris du pixel. On entraîne le laser et le support dans un mouvement relatif de balayage. On met en forme le faisceau laser de manière à ce qu' il projette un spot oblong sur le support. Ce spot présente une dimension dans la direction de balayage inférieure à une dimension dans une direction sensiblement perpendiculaire à la direction de balayage. On agit sur l'allumage et l'extinction du laser et/ou la puissance du faisceau laser pour que le motif en cours d'enregistrement ait une taille voulue.

Selon une caractéristique du procédé d'enregistrement, on enregistre chaque motif dans une maille du support. Les mailles forment une succession. On règle l'allumage du laser pour l'enregistrement d'un motif dans une maille donnée à partir d'un instant où le laser survole le centre de la maille précédent la maille donnée.

De préférence, on règle la puissance du laser pour ajuster la dimension du spot dans la direction sensiblement perpendiculaire à la direction de balayage.

## BRÈVE DESCRIPTION DES DESSINS

La présente invention sera mieux comprise à la lecture de la description d'exemples de réalisations donnés, à titre purement indicatif et nullement limitatif, en faisant référence aux dessins annexés, sur lesquels :

- les figures 1A et 1B (déjà décrites) représentent des motifs inscrits sur des supports par des dispositifs d'enregistrement connus ;
- la figure 2 représente un dispositif d'enregistrement de données graphiques sur un support suivant l'un des modes de réalisation de la présente invention ainsi qu'un dispositif de lecture de données graphiques enregistrées par le dispositif d'enregistrement selon l'invention ;
- les figures 3A, 3B montrent deux motifs différents inscrits sur un support par le dispositif d'enregistrement de l'invention ainsi que, pour chacun des motifs, la période pendant laquelle le laser a été allumé ;
- la figure 4A représente une donnée graphique à enregistrer avec ses niveaux de gris avant qu'elle ne soit traitée par le dispositif d'enregistrement de l'invention ;
- la figure 4B est le résultat de l'enregistrement de la donnée graphique représentée à la figure 4A, réalisé avec le dispositif d'enregistrement de l'invention ;
- la figure 5A représente un faisceau laser qui peut être employé dans le cadre de l'invention ;
- la figure 5B représente différentes tailles de spots de faisceau laser, obtenus grâce au dispositif d'enregistrement de l'invention ;
- la figure 6 est un graphique représentant des coupes d'intensité de faisceau laser circulaire dans des cas qui ne se rapportent pas à l'invention ;
- la figure 7 est une gamme de motifs correspondants à différents niveaux de gris, obtenue avec un dispositif d'enregistrement de l'invention dans le cas où le support est photosensible ;
- la figure 8 est un graphique montrant la puissance normalisée du laser et le rapport de surface du motif sur la surface de la maille dans le cas où le support est photosensible ;
- la figure 9 est une gamme de motifs correspondants à différents niveaux de gris, obtenue avec un dispositif d'enregistrement de l'invention dans le cas où le support est thermosensible ;
- la figure 10 est un graphique montrant la puissance normalisée du laser et le rapport de surface du motif sur la surface de la maille dans le cas où le support est thermosensible ;
- la figure 11 représente des moyens de mise en forme du faisceau laser utilisés dans un dispositif d'enregistrement conforme à l'invention ;
- la figure 12 représente une variante des moyens de mise en forme du faisceau laser utilisés dans un dispositif d'enregistrement conforme à l'invention ;
- la figure 13 représente encore une variante des moyens de mise en forme du faisceau laser utilisés dans un dispositif d'enregistrement conforme à l'invention ;
- la figure 14 représente un dispositif d'asservissement de la position du dispositif de mise en forme du faisceau laser utilisé dans un dispositif d'enregistrement conforme à l'invention ;
- la figure 15 représente un exemple de support d'enregistrement de type disque optique utilisable avec un dispositif d'enregistrement conforme à l'invention ;
- les figures 16A, 16B et 16C représentent trois procédés de traitement de supports d'enregistrements inscrits par le dispositif d'écriture contenu dans un dispositif d'enregistrement conforme à l'invention ;
- la figure 17 illustre une variante d'un dispositif d'enregistrement conforme à l'invention fonctionnant d'une autre manière ainsi que les séquences d'allumage et d'extinction du laser utilisées pour obtenir les motifs enregistrés;
- la figure 18 représente un schéma fonctionnel du procédé de lecture et d'écriture selon l'invention ainsi que du procédé de lecture de données graphiques enregistrées par le procédé d'enregistrement ;
- les figures 19A et 19B représentent deux motifs de tailles maximales enregistrés par le procédé de l'invention ;
- la figure 19C représente un graphique présente l'évolution du rapport de surface RS en fonction de la taille du spot dans la direction de balayage.

## EXPOSÉ DÉTAILLÉ DE MODES DE RÉALISATION PARTICULIERS

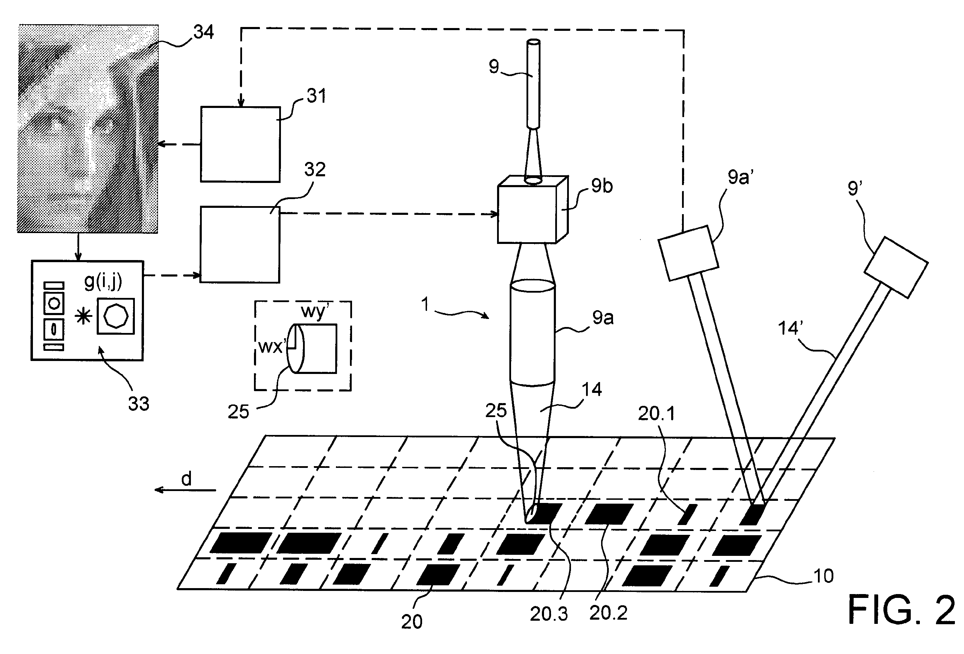

La figure 2 représente un dispositif d'enregistrement de données graphiques 34 ainsi qu'un dispositif de lecture des données graphiques enregistrées. Une donnée graphique 34 à enregistrer comporte une pluralité de pixels Pi pouvant prendre des niveaux de gris issus d'une gamme de niveaux de gris. On rappelle que les niveaux de gris peuvent représenter des demi-teintes si la donnée graphique est en couleurs. On suppose dans l'exemple décrit que la donnée graphique 34 est une photographie.

Le dispositif d'enregistrement comporte des moyens de conversion 32 du niveau de gris de chaque pixel Pi de la donnée graphique à enregistrer 34 en un une taille donnée de motif, à l'aide d'une table de conversion 33 qui fait correspondre un niveau de gris à une taille donnée de motif. Chaque pixel Pi sera enregistré sous la forme d'un motif inscrit sur un support 10.

Il comporte également un dispositif d'écriture 1 des motifs 20. Le dispositif d'écriture 1 comporte une cascade avec un laser 9 et en aval des moyens de mise en forme 9a d'un faisceau laser 14 produit par le laser 9. Ces moyens de mise en forme 9a incluent un dispositif de focalisation non visible sur la figure 2. Le faisceau laser 14 traverse les moyens de mise en forme 9a et émerge en sortie des moyens de mise en forme 9a en étant convergeant. Le dispositif d'écriture 1 comporte, de plus, des moyens de réglage de la taille du motif 9b agissant sur l'allumage et l'extinction du laser et/ou la puissance du faisceau laser.

Ces moyens de réglage 9b peuvent être formés par des moyens de modulation placés en aval du laser 9 mais en amont des moyens de mise en forme 9a. Le laser est alors continu. En variante, ils peuvent être intégrés au laser 9. Le laser fonctionne en alternance (allumé/éteint). Les moyens de réglage 9b fonctionnent à une fréquence caractéristique $f_{laser}$. Le dispositif optique 1 est destiné à coopérer avec un support 10 sensible au faisceau laser 14 sur lequel vont être inscrits les motifs 20. Sur la figure trois motifs sont référencés 20.1, 20.2, 20.3, ils viennent juste d'être inscrits ou sont en cours d'inscription. Le faisceau laser 14 qui émerge des moyens de mise en forme 9a est focalisé sur le support 10 placé dans un plan de focalisation des moyens de mise en forme 9a. Les moyens de mise en forme 9a sont destinés à mettre en forme le faisceau optique de manière à ce qu'un spot oblong 25 se projette sur le support 10.

Un mouvement relatif est prévu entre le laser 9 et le support 10, de manière à ce que le faisceau laser 14 soit animé d'un mouvement de balayage du support 10 selon une direction donnée d, à vitesse sensiblement constante, cette vitesse est appelée vitesse linéaire.

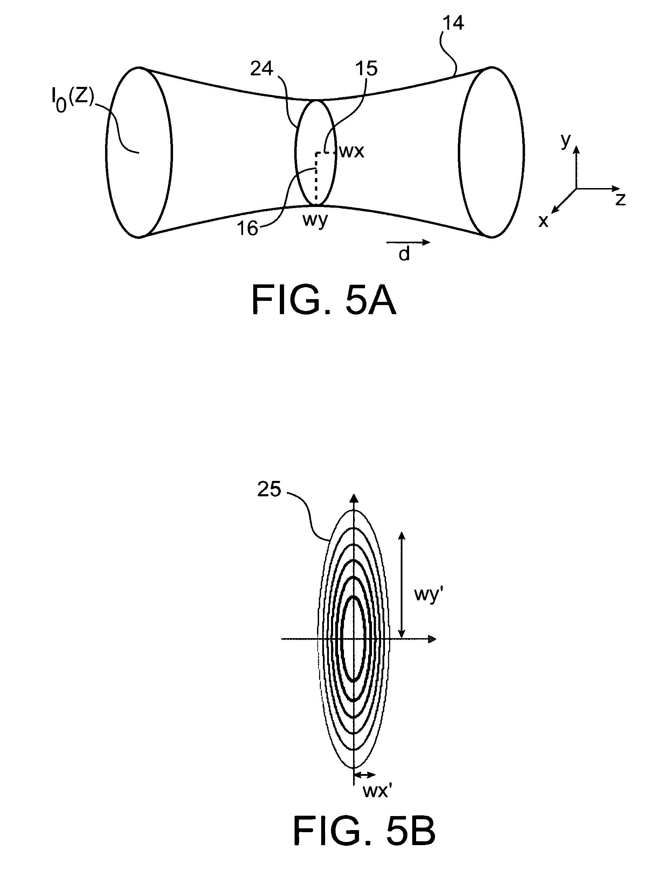

Le spot 25 de forme oblongue possède une dimension wx' dans la direction de balayage d et une dimension wy' dans une direction sensiblement perpendiculaire à la direction de balayage. La figure 5B illustre différentes tailles de spots 25 délivrés par différents moyens de mise en forme 9a et les dimensions wx', wy' sont référencées. La dimension wx' dans la direction de balayage est plus petite que la dimension wy' dans la direction sensiblement perpendiculaire à la direction de balayage. Le faisceau laser 14 est utilisé pour inscrire les motifs 20 dans le support 10 sensible au faisceau laser 14, chacun localisé dans une maille 17 située en surface du support 10. Généralement les mailles sont fictives. Les mailles 17 jointives forment une succession, elles peuvent être arrangées en lignes et colonnes, en spirale ou en hélice par exemple. Les mailles 17 sont repérées par des pointillés sur la figure 2. Les mailles 17 sont identiques, par exemple, mais ce n'est pas une obligation.

Les motifs 20.1, 20.2, 20.3 ont également une taille ajustable comme on peut le voir sur la figure 2. Le motif 20.3 est en cours d'inscription et les motifs 20.1, 20.2 sont déjà inscrits, le motif 20.1 ayant une taille plus petite que le motif 20.2.

La taille du motif 20 enregistré sur le support 10, est fonction de la taille du spot 25, cette taille dépendant des moyens de mise en forme 9a employés mais aussi de la puissance du laser 9 et de la durée d'allumage du laser. Plus la puissance du laser 9 est élevée plus la dimension wy' du spot 25 sera grande.

Quant à la taille d'un motif 20, elle dépend de la taille du spot 25 mais également de la durée d'allumage du laser 9 et de la vitesse de balayage du laser 9. Mais on suppose que la vitesse de balayage est constante.

Plus la durée d'allumage est longue, plus le motif 20 aura une dimension importante dans la direction du balayage d. Sa dimension dans une direction sensiblement perpendiculaire à la direction de balayage correspond sensiblement à la dimension wy' du spot 25.

Puisque le niveau de gris d'un pixel Pi dépend de la taille du motif 20 qui correspond à ce pixel, le second motif 20.2 correspond soit à un pixel plus foncé que le pixel Pi auquel correspond le premier motif 20.1, soit à l'inverse.

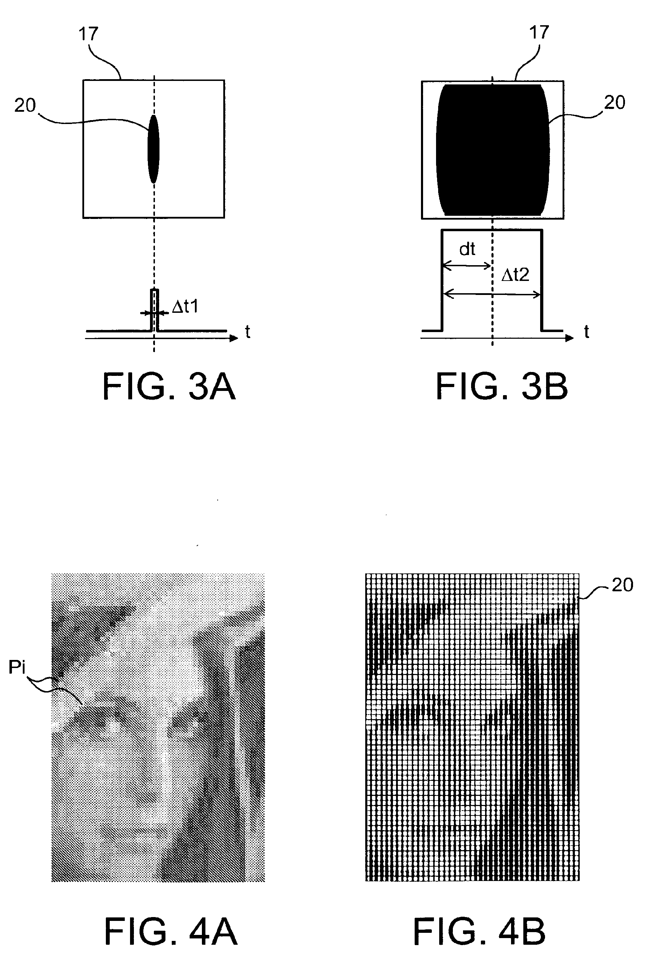

Les figures 3A, 3B représentent deux motifs 20 inscrits dans une maille 17 du support, ils ont des tailles différentes. On a aussi représenté le niveau de puissance et la durée d'allumage du laser utilisé pour inscrire ces motifs 20. Dans les deux cas, le faisceau laser balaye le support. Sur la figure 3A, la durée d'allumage $\Delta t1$ est faible et le niveau puissance du laser également. Le motif 20 est de petite taille par rapport à la taille de la maille 17. Sur la figure 3B au contraire, la durée d'allumage At2 est longue et le niveau puissance du laser est plus élevé. Le motif 20 a une taille qui se rapproche de la taille de la maille 17. On peut remarquer que dans les deux cas, le motif 20 est sensiblement centré dans la maille 17. On verra plus loin que ce n'est pas une obligation. Sur la figure 3B, on voit que l'allumage du laser 9 débute avec une avance dt, avant que le laser 9 pointe le centre de la maille 17 tandis que sur la figure 3A, l'allumage du laser n'a lieu que très peu de temps avant que le laser pointe le centre de la maille 17.

Ainsi ce dispositif d'enregistrement permet d'inscrire un motif 25 par un passage unique du faisceau laser 14, contrairement aux techniques connues jusqu'alors.

Les figures 4A et 4B montre les résultats d'un procédé d'enregistrement utilisant le dispositif d'enregistrement décrit à la figure 2. La donnée graphique à enregistrer montrée en figure 4A est une donnée formée de pixels Pi en niveaux de gris. C'est-à-dire que chaque pixel de la donnée graphique représente une intensité lumineuse. La figure 4B montre la donnée graphique telle qu'enregistrée sur le support 10 sous forme de motifs 20, à l'aide du dispositif d'enregistrement de l'invention. Le niveau de gris d'un pixel enregistré est donné par le rapport de la surface du motif 20 sur la surface de la maille 17.

La figure 5A représente un faisceau laser 14, il peut être caractérisé par son intensité au centre du faisceau $I_0(z)$ dans un plan perpendiculaire à la direction de propagation d, ainsi que par son col 24 (waist en anglais). Dans le présent dispositif d'enregistrement, le col 24 situé en sortie des moyens de mise en forme du faisceau laser est de forme oblongue avec un grand axe 16 de dimension wy et un petit axe 15 de dimension wx. On parle ici de faisceau gaussien, c'est-à-dire d'un faisceau dont l'amplitude est décrite par une fonction exponentielle $A(x) = exp(-x^2/w^2)$. Le paramètre w est tel que si x = w, l'amplitude du signal vaut $A(w) = exp(-1) = 1/e$.

En termes d'intensité de faisceau, on a la même chose $I(x) = A^2(x) = exp(-2x^2/w^2)$. Le paramètre w est alors tel que si x = w, l'intensité est $I(w) = exp(-2) = 1/e^2$.

D'une manière générale on appelle w le col et on le décrit comme le rayon du faisceau correspondant à la valeur exp(-2) de l'intensité.

wy et wx sont les rayons à $1/e^2$ de la distribution d'intensité du faisceau.

La figure 5B montre différents spots 25 découlant de différents cols 24 obtenus suivant le dispositif de l'invention. Ces spots permettent d'obtenir des motifs de tailles différentes pour traduire les différents niveaux de gris des pixels de la donnée graphique à sauvegarder.

Dans le dispositif de l'invention, on n'utilise pas des spots circulaires. On va expliquer pourquoi.

En effet dans ce cas, les dimensions du col sont telles que wx=wy=w0, w0 représentant son rayon. Dans le cas d'un support 10 thermosensible, c'est à dire sensible à l'échauffement du matériau provoqué par l'intensité lumineuse, il est possible de calculer le rayon $r_s$ du spot du faisceau laser dans le plan de focalisation, connaissant le diamètre du col, l'intensité lumineuse de saturation $I_s$ à partir de laquelle le support est modifié par l'irradiation, et l'énergie $E_0$ du faisceau laser. Le rayon $r_s$ du spot suit une progression logarithmique décrite par la formule ci-dessous :

$$r_s^2 = \frac{w_0^2}{2} \ln\left[\frac{2 \times E_0}{I_s \times \pi \times w_0^2}\right]$$

Le rayon du spot, pour un matériau donné, dépend donc de l'énergie du faisceau laser et du rayon du col. L'énergie du faisceau laser est fixée par le réglage de la puissance du laser.

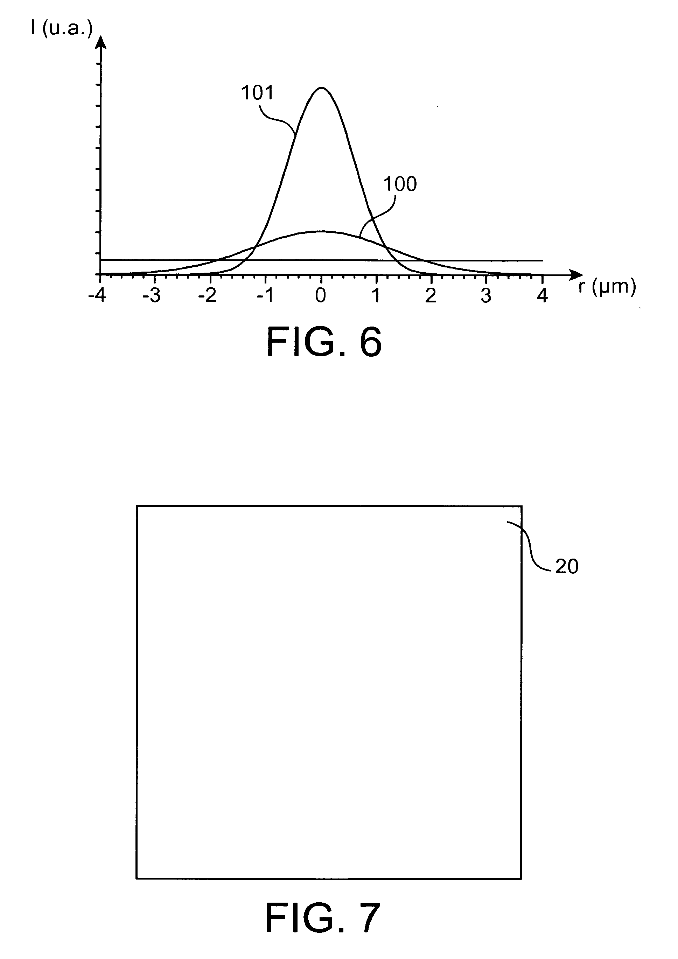

La figure 6 montre deux coupes 100, 101 du profil de l'intensité lumineuse de saturation Is d'un faisceau laser dans un plan perpendiculaire à la direction de propagation. La première coupe 100 est obtenue avec un col de rayon w0=2,5 $\mu$m, et la deuxième coupe 101 avec un rayon w0=1,2 $\mu$m. Dans la première coupe 100 le rayon $r_s$ du spot vaut 2,1 $\mu$m, dans le deuxième cas il vaut 1,4 $\mu$m. Il est possible de contrôler la taille du spot d'un faisceau laser dans le plan de focalisation seulement en contrôlant son intensité. Cependant un spot circulaire pose deux problèmes majeurs. Tout d'abord, du fait de la progression logarithmique du rayon du spot $r_s$, ce dispositif n'est pas avantageux. En effet cette progression implique par exemple que pour obtenir un rayon de spot de 2,1 $\mu$m à partir d'un rayon de col $w_0$ de 1,2 $\mu$m, il faudrait multiplier par un vingt la puissance du laser, par rapport au faisceau de rayon de col w0 de 2,5 $\mu$m. Ensuite, comme il est possible de le constater sur la figure 6, dans le cas où le rayon du col vaut 1,2$\mu$m, l'intensité au centre du faisceau peut être très élevée au point d'endommager le support pour les petites tailles de cols. Le changement de puissance d'un laser monté sur des moyens de mise en forme du faisceau laser à section circulaire, ne permettrait donc pas d'obtenir à lui seul facilement une gamme de motifs de tailles variables pour l'utilisation souhaitée. Ce sont les raisons pour lesquelles dans le cas de l'invention les moyens de mise en forme modèlent un faisceau laser projetant un spot oblong sur le support.

Avec le dispositif d'enregistrement selon l'invention, il est possible d'utiliser un support de type photosensible, c'est-à-dire, sensible à l'exposition ou dose. On rappelle que la dose correspond à l'intégrale temporelle de l'intensité lumineuse du spot. On choisit un laser ayant une puissance finale telle que le matériau du support ait un seuil de dose égal à 69% d'une dose maximale qui correspond à la dose utilisée pour former le motif plus grand. Avec un tel support, le dispositif d'écriture peut avoir les caractéristiques suivantes :

- wx > 195 nm
- wy = 1,3 xp où p représente le côté d'une maille qui dans l'exemple est sensiblement carrée, cette dimension correspond sensiblement à celle d'un pixel de la donnée graphique à enregistrer. Une valeur de p convenant est 1 micromètre par exemple
- $f_{laser}$ = 250 MHz

On note que la taille du spot selon x est bornée par la limite de diffraction avec des moyens de mise en forme ayant une ouverture numérique de 0,9 et une longueur d'onde du faisceau laser de 405 nm on obtient wx>193 nm.

Dans le dispositif d'enregistrement de l'invention, le déplacement du spot au sein d'une maille est proportionnel au niveau de gris du pixel à enregistrer dans ladite maille. Ce déplacement du spot 25 peut être nul, ce qui correspond à un motif de taille minimale et à un niveau de gris minimal et aller jusqu'à 1,45 x p, ce qui correspond à un motif de taille maximale et à un niveau de gris maximal. Lorsqu'il y a débordement d'un motif sur la maille suivante, il y a risque de chevauchement avec le motif à inscrire dans la maille suivante, mais le phénomène n'est pas gênant s'il n'est pas corrigé. Il est à noter que l'image peut être modifiée, avant l'écriture, avec des algorithmes de diffusion d'erreurs. Une telle modification permet de contrôler l'effet de débordement.

La puissance du laser est maintenue sensiblement constante et égale à 90% du niveau final pour les trois quart des premiers niveaux de gris les plus bas, puis est augmentée pour atteindre le niveau final suivant l'équation suivante :

$$Pn_i=0,9 \text{ pour } i=1 \text{ à } 3N/4$$

$$Pn_i=0,9 +0,1x\left(\frac{i-3N/4}{N/4}\right)^2 \text{ pour } i= 3N/4 \text{ à } N$$

où N désigne le nombre de niveaux de gris désirés, i le rang du niveau de gris dans la succession croissante des niveaux de gris, et $Pn_i$ la puissance normalisée en sortie du laser pour le niveau de gris de rang i.

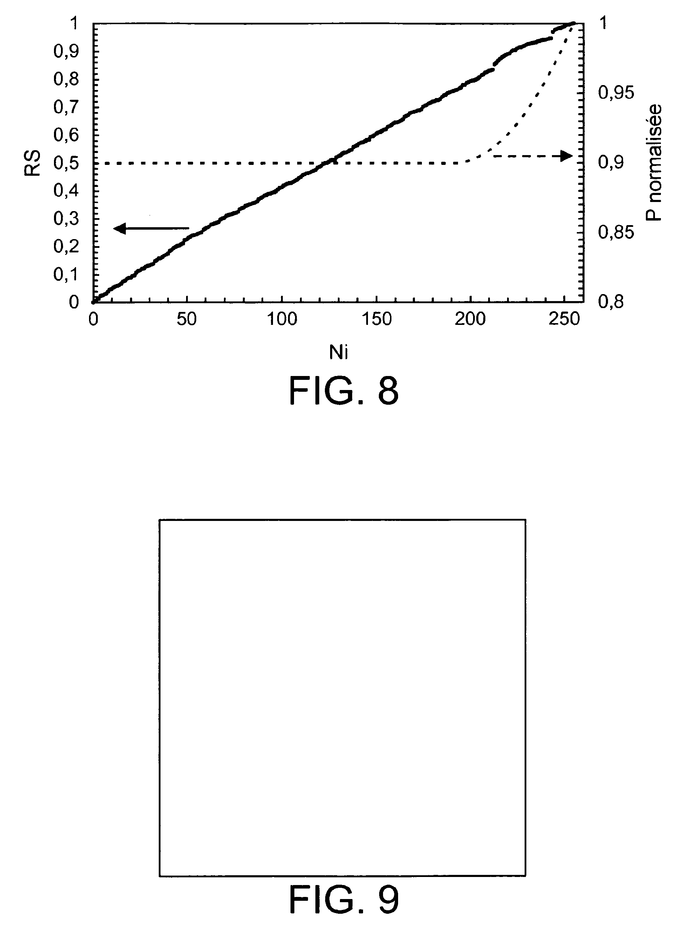

La figure 7 représente une gamme de motifs enregistrés traduisant une gamme de niveaux de gris. Cette gamme de motifs correspond à 256 niveaux de gris qui peuvent être codés suivant ce mode de réalisation de l'invention. Un motif est représenté en noir sur un fond blanc. Les motifs sont disposés par ordre croissant de leur taille. C'est-à-dire que le motif de taille nulle, et correspondant au blanc est en haut à gauche, alors que le motif de taille maximale et correspondant au noir et en bas à droite. La figure 8, est un graphique présentant en abscisse les indices des 256 niveaux de gris classés dans l'ordre croissant et en ordonnée, à gauche, le rapport RS de la surface du motif sur celle de la maille et à droite, la puissance normalisée en sortie du laser.

La courbe en trait plein exprime donc le rapport RS pour chaque niveau de gris Ni. Il est possible d'observer une croissance linéaire de ce rapport RS en fonction du niveau de gris, comme on le désirait. La courbe en pointillés exprime la puissance normalisée pour chaque niveau de gris Ni. On observe que cette puissance est constante pour les ¾ des premiers niveaux de gris, du rang 0 à 192, puis croit jusqu'au rang 256.

Avec le dispositif d'enregistrement selon l'invention, il est possible d'utiliser un support de type thermosensible. Il n'y a plus de notion de dose avec ce type de support. L'absence d'effet cumulé sur le faisceau laser fait que les puissances mises en jeu doivent être plus faibles notamment pour les motifs de petite taille. Ce type de support impose un autre dimensionnement du faisceau laser et un autre choix de la puissance du laser.

Avec un tel support, le dispositif d'écriture peut avoir les caractéristiques suivantes :

- wx > 195 nm
- wy = 0, 85 xp
- $f_{laser}$ 256 MHz

La puissance du laser est choisie telle que la puissance maximale corresponde au double de la puissance à partir de laquelle le matériau est sensible. De la même manière que le mode de réalisation précédent, la durée d'allumage du laser est proportionnelle au niveau de gris du pixel à enregistrer. Le minimum de déplacement du spot est toujours sensiblement nul. Par contre, à la différence du cas précédent, le maximum de déplacement du spot correspond à p, qui est un côté de la maille.

La puissance du laser est quant à elle croissante sur environ la moitié des niveaux de gris les plus faibles, puis sensiblement constante au niveau de la partie centrale de la gamme de niveaux de gris, puis de nouveau croissante jusqu'à la valeur maximale, en suivant par exemple la loi suivante :

$$Pn_i = 0,8 \; -0,3x\left(\frac{N/2-i}{N/2-1}\right)^{1.5} \text{pour } i=1 \text{ à } N/2$$

$$Pn_i = 0,8 \; +0,2x\left(\frac{i-N/2}{N/2}\right)^{4} \text{pour } i=N/2 \text{ à } N$$

La figure 9 est similaire à la figure 7 et représente une gamme de motifs traduisant une gamme de 256 niveaux de gris.

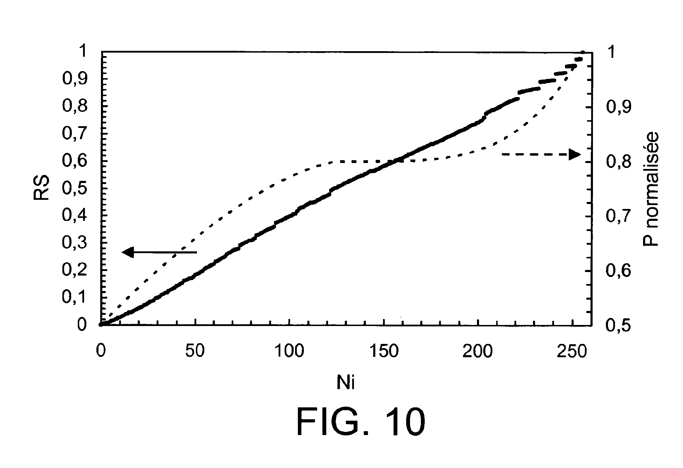

La figure 10 est similaire à la figure 8. L'allure de la courbe de puissance normalisée est bien conforme à ce qui a été exposé plus haut avec trois phases dont deux croissantes encadrant une phase sensiblement stable.

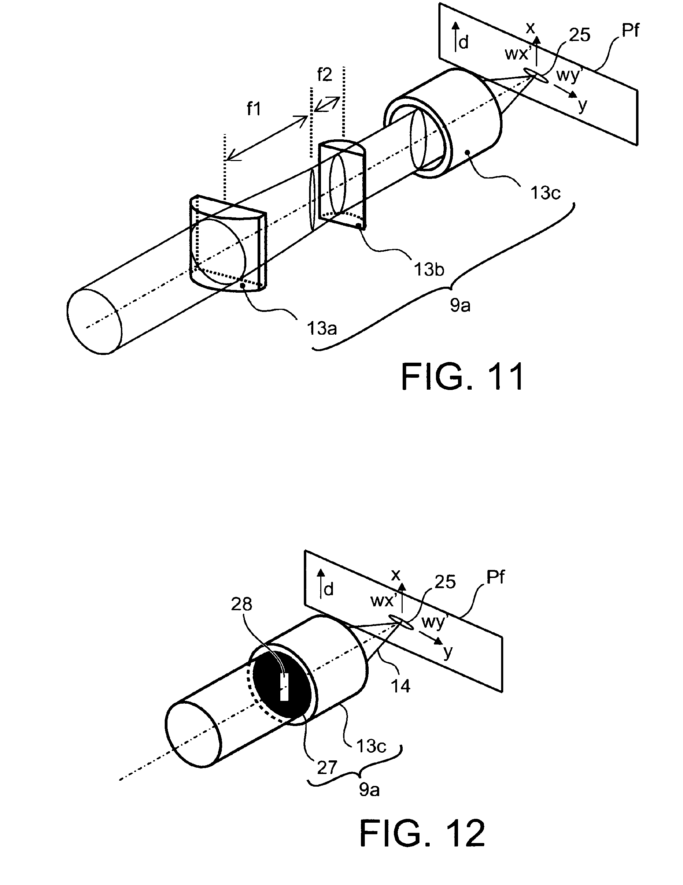

La figure 11 montre un premier mode de réalisation des moyens de mise en forme 9a permettant d'obtenir un spot 25 oblong. Ils comportent d'une part un télescope cylindrique comportant au moins deux lentilles cylindriques, 13a, 13b de focales généralement différentes, disposées à la suite l'une de l'autre dans une configuration sensiblement afocale et d'autre part, un dispositif de focalisation 13c, en aval des lentilles cylindriques 13a, 13b. Les lentilles cylindriques 13a, 13b du télescope cylindrique permettent de conserver le parallélisme du faisceau laser 14 tout en l'anamorphosant, c'est-à-dire en donnant une forme oblongue à une section droite du faisceau laser 14. Cette forme oblongue est sensiblement elliptique. Chacune des lentilles cylindriques 13a, 13b permet de contrôler respectivement les dimensions du col du faisceau laser 14. Le dispositif de focalisation 13c permet quant à lui de focaliser le faisceau laser 14 dans un plan de focalisation Pf. Le spot 25 qui se projette sur le plan de focalisation Pf a bien une dimension wx' selon x plus petite que sa dimension wy' selon y. Dans le dispositif d'enregistrement selon l'invention, la direction de balayage d est selon x. De tels moyens de mise en forme 9a de type télescope cylindrique offrent la possibilité de modifier aisément la dimension wy' du spot 25 en ayant à disposition plusieurs lentilles cylindrique 13b qui sont interchangeables. En remplaçant dans le télescope cylindrique, la lentille 13b par une autre, ayant une focale f2 différente, on peut enregistrer des données graphiques ayant des tailles de pixels différents ou réaliser des sauvegardes sur des supports en matériaux différents.

Un autre mode de réalisation des moyens de mise en forme 9a permettant d'obtenir un spot oblong 25 est illustré en figure 12. Ils comportent un obturateur 27 placé en aval du laser (non représenté) et est suivi du système de focalisation 13c. L'obturateur 27 est muni d'une ouverture oblongue 28. L'obturateur permet d'arrêter partiellement le faisceau laser 14 et de ne laisser passer qu'une partie du faisceau laser au niveau de l'ouverture oblongue 28. Le faisceau laser qui traverse l'obturateur 27 est ensuite focalisé par le dispositif de focalisation 13c dans le plan de focalisation Pf. L'ouverture 28 est représentée sensiblement rectangulaire dans l'exemple décrit, d'autres formes oblongues sont bien entendu possibles. Un inconvénient de ce mode de réalisation par rapport au système avec le télescope cylindrique est que la puissance du faisceau laser est réduite après le passage de l'obturateur 27.

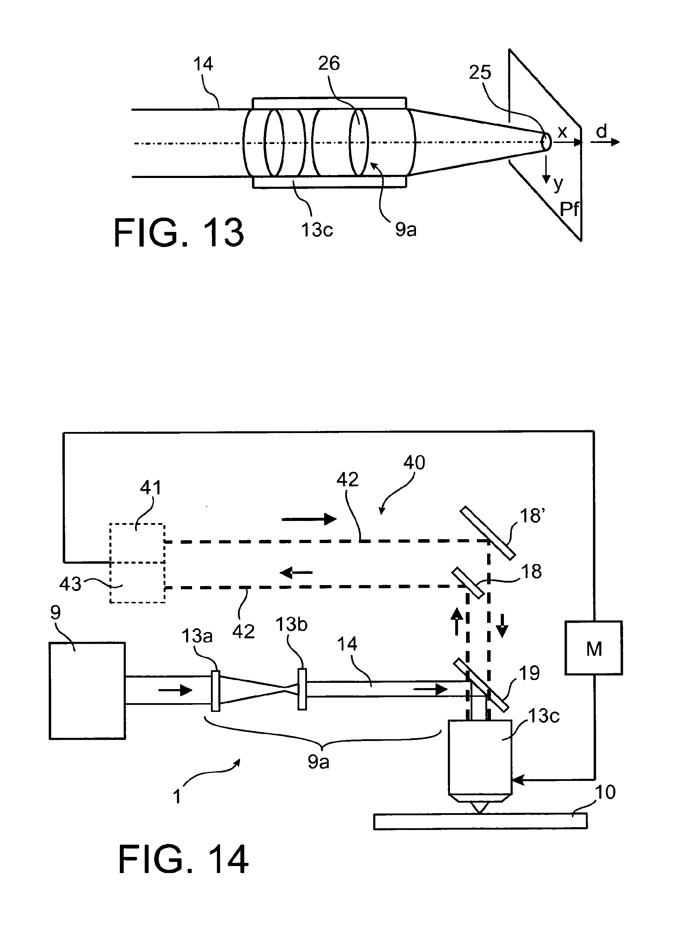

Un autre mode de réalisation des moyens de mise en forme 9a permettant d'obtenir un spot oblong 25 est illustré en figure 13. Ils consistent à exploiter les aberrations non symétriques, comme par exemple, la coma ou l'astigmatisme d'au moins un élément du dispositif de focalisation 13c. On introduit alors volontairement dans le dispositif de focalisation 13c que comprennent les moyens de mise en forme 9a, placé en aval du laser (non représenté) de telles aberrations, de manière à dégrader la focalisation du faisceau laser 14 dans une direction. A titre d'exemple, on a représenté au sein du dispositif de focalisation 13c, une lentille aberrante 26 dont une composante est rendue cylindrique.

D'autres moyens pourraient être employés pour l'obtention du spot oblong, une telle transformation ne pose pas de problèmes à un homme du métier.

La figure 14 représente partiellement un dispositif d'enregistrement de données graphiques sur un support 10 selon l'invention, dans lequel le dispositif d'écriture 1 coopère avec des moyens d'asservissement 40 du moyen de mise en forme 9a et plus particulièrement avec leur dispositif de focalisation 13c en fonction de son éloignement du support 10 de manière à conserver le support 10 dans le plan de focalisation des moyens de mise en forme 9a. Les moyens de mise en forme 9 sont représentés de manière similaire à la configuration de la figure 11 avec un télescope cylindrique.

Les moyens d'asservissement 40 utilisent une source de lumière 41 qui génère un faisceau lumineux 42 dit faisceau sonde vers le dispositif de focalisation 13c. Le faisceau sonde 42 se propage dans le dispositif de focalisation 13c en restant à sa périphérie, pour permettre l'asservissement. Le faisceau sonde 42 après avoir traversé le dispositif de focalisation 13c se réfléchit sur le support 10 et est renvoyé vers un détecteur 43. Lors d'une défocalisation, le faisceau sonde 42 subit une déviation angulaire détectée par le détecteur 43. Des moyens de déplacement M du dispositif de focalisation 13c et/ou du support 10 sont prévus, ils sont activés tant que la défocalisation n'a pas été supprimée.

On a représenté un jeu de deux miroirs de renvoi 18, 18' pour d'une part, dévier angulairement le faisceau sonde 42 sur son chemin aller depuis la source de lumière 41 vers le dispositif de focalisation 13c et d'autre part, dévier le faisceau sonde 42 sur son chemin de retour depuis le dispositif de focalisation 13c vers le détecteur 43. On a également représenté une lame semi-transparente 19 pour d'une part, dévier le faisceau laser sur son trajet entre le laser 9 et le dispositif de focalisation 13c et d'autre part, laisser passer le faisceau sonde 42 sur son trajet aller ou retour. Si le support 10 est dans le plan de focalisation du dispositif de focalisation, le faisceau sonde réfléchi 42 n'est pas dévié et les moyens de déplacement M ne sont pas activés. Dans cette configuration, le télescope cylindrique avec les lentilles 13a, 13b ne perturbe pas le fonctionnement du dispositif d'asservissement 40, le faisceau sonde 42 ne le traverse pas, car il est décalé angulairement par rapport à l'axe principal du dispositif de focalisation 13c. Cet avantage est absent si on utilise un dispositif d'écriture similaire à celui de la figure 13.

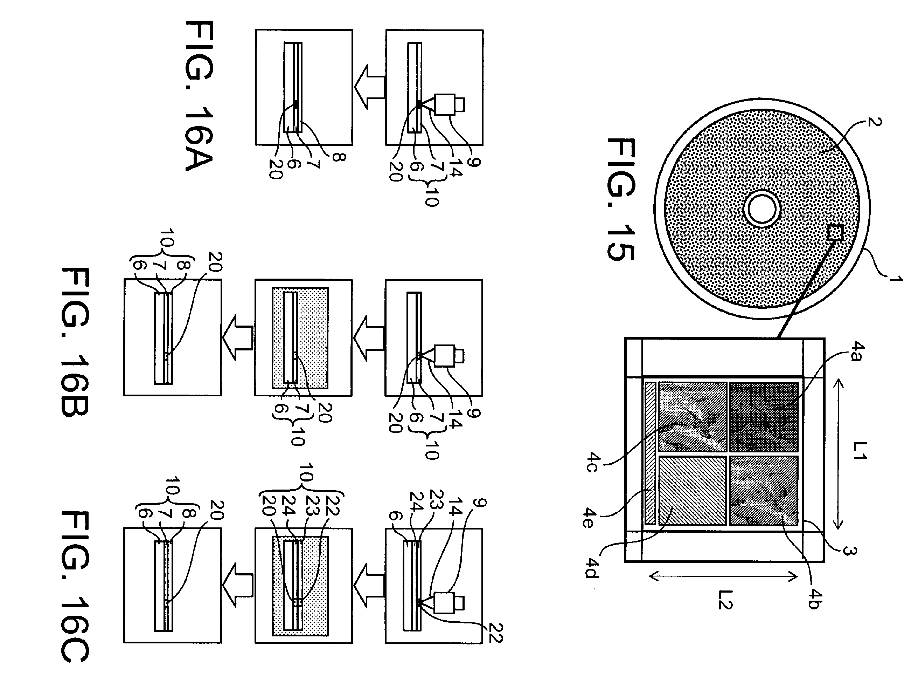

La figure 15 montre le cas particulier où le support 10 est un disque optique. Le support 10 comporte une zone 2 sur laquelle sont stockées des données graphiques par le procédé d'enregistrement de l'invention. La zone de stockage 2 est formée d'une pluralité d'unités de stockage 3 qui vont contenir chacune, des données relatives à une donnée graphique. Par exemple dans le cas d'une donnée graphique en couleurs de type photographie, l'unité de stockage 3 pourra contenir au moins trois sous unités de stockage, 4a, 4b et 4c qui correspondent aux différentes couleurs : par exemple la sous unité 4a est affectée au bleu, la sous unité 4b au rouge, la sous unité 4c au vert. Elle pourra contenir d'autres sous unités 4e et 4d qui contiendraient, par exemple, des informations relatives à la donnée graphique, comme par exemple, la date de prise de vue, ou plus généralement de création, sa focale, son ouverture ou bien sa taille, et même d'autres caractéristiques d'archivage. Une sous unité 4e peut être utilisée pour le repérage de l'unité dans le support 1. Cette dernière pourra être codée par exemple sous la forme d'une écriture typographique de type numéro, par exemple, ou de type numérique, par exemple, un code barre. Suivant le type de donnée graphique à enregistrer l'unité de stockage sera différente. Par exemple, si la donnée graphique à enregistrer est monocolore avec un seul niveau de gris, une seule sous unité peut suffire, une seconde peut toutefois être présente pour le repérage sur le support.

Ainsi une donnée graphiques enregistrée sur une unité de stockage contenant, par exemple, cinq sous unités telles que définies précédemment aura une surface totale $S_{unité}$ définie par :

$$S_{unité} = D_{image} \times p^2 \times N_{sous-unité}$$

où :

- $D_{image}$ désigne la définition d'une donnée graphique, par exemple, dans le cas d'une photographie à 3 Mégapixels, la définition $D_{image}$ vaut 2048x1536 pixels.
- p correspond au côté d'une maille dans laquelle on inscrit un motif.
- $N_{sous-unité}$ est le nombre de sous unités pour une zone de stockage.

Dans le cas d'un support de stockage de type disque optique la surface totale de stockage est définie par :

$$S_{totale} = \pi \times (R_{max}^2 - R_{min}^2)$$

où :

- $R_{max}$ désigne le rayon maximal de la zone de stockage 2 du disque.
- $R_{min}$ désigne le rayon minimal de la zone de stockage 2 du disque.

Par exemple, si les mailles ont un côté p valant 1 $\mu$m, et que le nombre $N_{sous-unité}$ de sous unités est de 4, une zone de stockage a une dimension de 4,10x3,07 mm². Généralement un disque optique a une surface de 8600 mm². On peut donc y stocker environ 680 photographies. Il est possible d'augmenter la capacité de stockage en diminuant la taille des pixels, mais cela dégrade la dynamique des niveaux de gris des données graphiques enregistrées et donc leur qualité. Le but de l'invention est de proposer un dispositif d'enregistrement qui permet une sauvegarde fiable et pas forcément une sauvegarde massive de données graphiques. Dans une application grand public, la sauvegarde de quelques centaines de photographies par disque semble satisfaisante.

Il est possible de distinguer au moins trois types de traitements à appliquer au support 10 pour y inscrire des motifs 20 avec le dispositif d'enregistrement de l'invention.

Sur la figure 16A, on a représenté, en coupe transversale, un support 10 utilisé avec le dispositif d'enregistrement de l'invention dans une première configuration. Il comporte une base 6 formée par exemple d'un disque de matière plastique de type de ceux utilisés dans les disques compacts. La base 6 est surmontée d'un matériau sensible 7 à l'éclairement du laser 9. Pour inscrire un motif 20, on soumet le matériau sensible 7 au faisceau 14 du laser modulé en puissance, le support 10 et le laser 9 étant animés d'un mouvement de balayage l'un par rapport à l'autre. Sous l'effet du faisceau laser 14, le matériau sensible 7 est modifié localement, et cette modification concerne le contraste optique entre le matériau sensible 7 non irradié par le faisceau laser 14 et le matériau sensible 7 irradié par le faisceau laser 14. Eventuellement, on prévoit une protection 8 superficielle, par exemple de type vernis ou de type film plastique collé sur le matériau sensible après inscription.

Sur la figure 16B, le substrat 6 est recouvert d'une couche 7 de matériau peu sensible à l'éclairement du faisceau laser 14, mais qui cependant présente une sélectivité chimique par rapport à une attaque physico-chimique, comme c'est le cas, par exemple, avec une couche de PtOx éclairée par un laser émettant à 405 nm. Après un éclairage d'une zone 22 par le faisceau laser 14, la zone insolée 22 est chimiquement attaquée et dissoute par un agent chimique. Cet agent chimique peut être un acide, tel que l'eau régale, dans l'exemple du PtOx en tant que matériau sensible. Un motif correspond à une absence de matériau sensible 7. Enfin comme précédemment, il est possible de déposer une couche de protection 8 superficielle.

Le dernier exemple illustré à la figure 16C concerne une méthode de lithographie classique. Le support 6 est recouvert d'une couche d'un matériau opaque 24, par exemple un métal tel que du chrome. Une couche de résine 23 est déposée sur la couche opaque 24. Après un éclairage d'une zone 22 de résine par le faisceau laser 14, on développe chimiquement la résine 23 et la couche de matériau opaque 24 est mise à nu localement. Le matériau opaque 24 mis à nu est gravé. Un motif 20 correspond à une zone de matériau opaque ou au contraire à une zone sans matériau opaque, cela dépend du type de résine employé. Enfin comme précédemment, il est possible de déposer une couche de protection 8 superficielle.

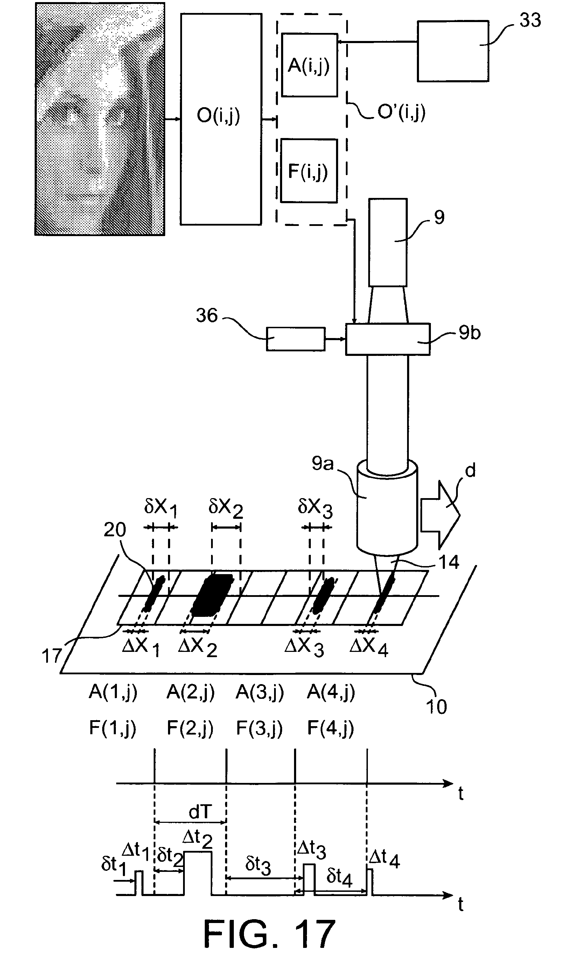

La figure 17 illustre une variante de procédé d'enregistrement de données graphiques, dans lequel l'inscription d'un motif permet toujours d'enregistrer le niveau de gris d'un pixel mais permet aussi d'enregistrer également une information supplémentaire. Cette information supplémentaire peut être la phase, par exemple de la transformée de Fourier rapide d'une image à enregistrer. Cette information est donnée par un décentrement du motif dans la maille. Cela signifie que dans cette variante, le motif n'est plus centré dans la maille.

La donnée graphique 34 que l'on veut enregistrer est sous forme numérique, en niveau de gris, codée par exemple sur 256 niveaux de gris. Elle peut être mise sous la forme d'une matrice de valeurs o(i, j), dont chaque élément correspond à un niveau de gris. Ensuite on calcule la transformée de Fourier rapide (FFT en anglais), ou tout autre transformée de cette matrice de valeurs. On obtient alors une matrice o'(i, j) de valeurs complexes. Cette matrice de valeurs complexes o' (i, j) peut être décomposée en une matrice d'amplitudes A(i,j) et une matrice de phases F(i, j).

On corrèle chaque valeur de la matrice complexe o'(i,j) à une taille de motif et à une position dans la maille grâce à la table de conversion 33 qui donne pour chaque amplitude A une taille de motif et pour chaque phase F une position du motif dans la maille.

Ensuite on inscrit sur le support 10, dans une maille 17, un motif 20 pour chaque élément de la matrice des valeurs complexes o'(i, j), la taille du motif 20 étant proportionnelle à l'amplitude de l'élément extrait de la matrice des amplitudes A (i, j). Comme décrit précédemment, pour inscrire ce motif, on joue sur la puissance du laser 9 et/ou sur la durée d'allumage du laser 9 grâce aux moyens de réglage 9b. On traduit la phase de l'élément, extraite de la matrice des phases F(i,j) par la position du motif 20 correspondant, dans la maille 17 et pour cela on joue sur l'instant d'allumage du laser 9 donné également par les moyens de réglage 9b. Les mailles 17 sont représentées en trait plein sur la figure 17. La phase des éléments de la matrice de phases F(i,j) est généralement comprise entre $-\pi$ et $+\pi$ modulo $2\pi$.

Un tel principe d'enregistrement de l'amplitude et de la phase a été présenté pour de l'holographie dans la publication « Complex Spatial Filtering with Binary Masks » B. R. Brown and A. Lohmann, Applied Optics" volume 5, numéro 6, pages 967-969.

Le dispositif d'enregistrement de l'invention comporte des moyens de synchronisation 36 de l'allumage du laser qui émettent une impulsion électrique dès que le laser 9 survole le centre d'une maille 17, comme on peut le voir sur le diagramme temporel supérieur de la figure 17. Ces moyens de synchronisation 36 coopèrent avec les moyens de réglage 9b. La durée d'allumage du laser $\Delta t$ pour inscrire un motif 20 est fonction de l'amplitude du niveau de gris que l'on souhaite coder. Dans le cas d'une phase nulle, le motif 20 est centré, c'est-à-dire qu'il est allumé avec une avance temporelle $\Delta t/2$ par rapport au centre de la maille 17. Dans le cadre d'une phase quelconque comprise entre $-\pi$ et $+\pi$, on décentre le motif 20 d'une distance $\delta x$ qui est fonction de la phase, par rapport au centre de la maille 17. Ainsi sur la figure 17, il est possible d'observer trois motifs 20 enregistrés, le quatrième étant en cours d'écriture, chacun de ces trois motifs ayant une dimension $\Delta x_1$, $Ax_2$ et $Ax_3$ dans la direction du balayage d et un décentrement différent $\delta x_1$, $\delta x_2$, $\delta x_3$. Les motifs décentrés de $\delta x_1$ et $\delta x_2$ ont une phase comprise entre 0 et $-\pi$ modulo $2\pi$. Le motif décentré de $\delta x_3$ a une phase comprise entre 0 et $+\pi$ modulo $2\pi$. Le motif en cours d'inscription aura une phase nulle modulo $2\pi$.

Les motifs inscrits correspondent à des éléments d'une même colonne j de la matrice complexe O' (i, j) ayant comme amplitude A(1, j) , A(2,j), A(3,j) A(4,j) et comme phase F(1,j), F(2, j), F(3,j), F(4,j).

Si on appelle dT le temps mis par le laser pour balayer une maille 17, Δt le temps d'allumage du laser 9 pour la sauvegarde d'un motif 20 d'amplitude A donnée et δt l'intervalle de temps compris entre le moment où le laser 9 survole le centre d'une maille 17 qui précède juste celle dans laquelle on s'apprête à inscrire un motif 20 et le moment où le laser 9 est allumé pour inscrire ce motif 20, on peut définir δt de la manière suivante :

- Si le motif à inscrire a une phase F nulle modulo 2π alors δt = dT - Δt/2
- Si le motif à inscrire a une phase F de -π modulo 2π alors δt = (dT - Δt) /2
- Si le motif à inscrire a une phase F de +π modulo 2π alors δt = (3dT - Δt)/2.

Sur la figure les grandeurs Δt et δt sont dotées d'indices 1 à 4 car elles sont relatives chacune à un des motifs.

Il est important de pouvoir disposer d'un maximum de tailles de mailles et de décentrement dans les mailles de manière à ce que lors de la lecture des données enregistrées, le résultat soit aussi proche que possible de l'original. Avec le procédé d'enregistrement selon l'invention on peut bénéficier d'un grand nombre de niveaux de gris et d'une grande résolution temporelle sur le temps d'allumage du laser.

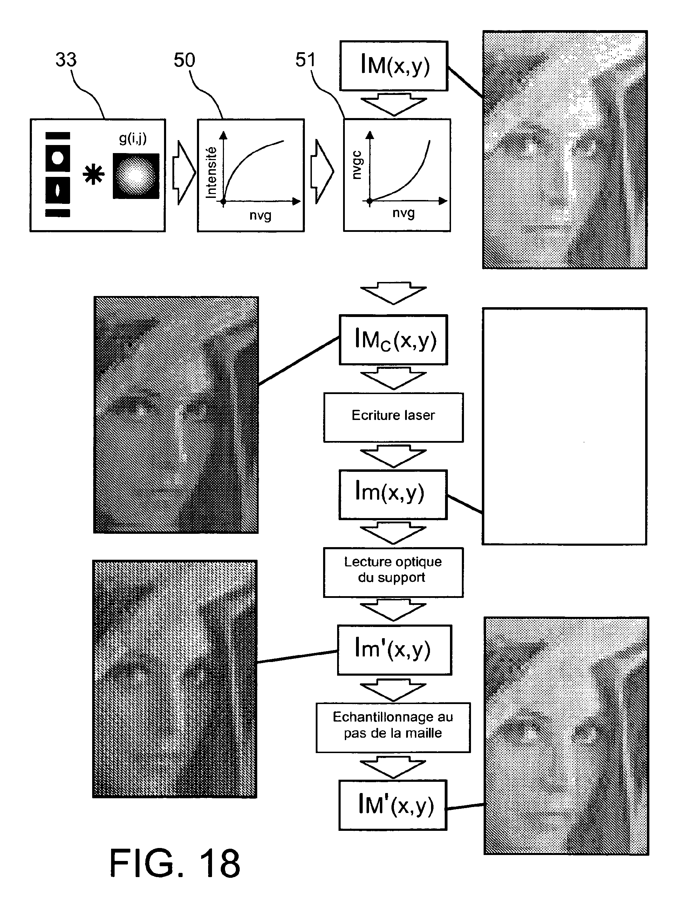

La figure 18 est un schéma fonctionnel montrant d'une part un procédé d'enregistrement de données graphiques selon l'invention et d'autre part un procédé de lecture de données graphiques enregistrées par le procédé d'enregistrement. On cherche à ce que les données graphiques récupérées soient les plus proches possibles des données graphiques originales que l'on a enregistrées.

On va tout d'abord décrire le dispositif de lecture de données enregistrées en se référant à la figure 2.

Le dispositif de lecture de données graphiques l'enregistrées par le procédé d'enregistrement doit être adapté au dispositif d'enregistrement. Il comporte un laser 9' qui délivre un faisceau laser 14' vers le support 10 sur lequel les données graphiques ont été enregistrées sous la forme de motifs, ce faisceau laser 14' est réfléchi par le support 10 et renvoyé vers un dispositif optique de collecte 9a' puis un dispositif de traitement 31 qui délivre les données graphiques récupérées sous une forme numérique. Le dispositif optique de collecte 9a' est caractérisé par une réponse percussionnelle g(x,y). On désigne par IM(x,y) une donnée graphique à enregistrer et par *Im(x,y)* la donnée graphique analogique telle qu'elle est enregistrée sur le support 10. La lecture de la donnée graphique enregistrée *Im(x,y)* par le dispositif de lecture objet de l'invention donne une nouvelle donnée graphique dite donnée graphique récupérée IM'(x,y) qui est le résultat de la convolution *Im (x,y)* \*g (x, y). L'objectif est que la différence entre IM' (x, y) et IM(x,y) soit aussi faible que possible. Il faut prendre en compte l'effet de la convolution de g(x,y) lors de la sauvegarde.

La table de conversion 33 prend en compte la réponse percussionnelle g(x,y) du dispositif optique de collecte 9a', et correspond au résultat de la convolution numérique de toutes les tailles de motifs avec la réponse percussionnelle g(x,y). La réponse percussionnelle g(x,y) est généralement de type gaussien avec un col. Cette fonction gaussienne approxime bien la réponse du dispositif optique de collecte 9a'. Le dispositif optique de collecte et/ou les moyens de mise en forme peuvent comporter une fonction d'apodisation, c'est-à-dire de réduction des lobes secondaires du spot de focalisation. On peut utiliser par exemple un dispositif optique de collecte et/ou les moyens de mise en forme tel que le col soit de 500 nm.

On obtient une dynamique de convolution qui donne pour chaque niveau de gris l'intensité du faisceau laser 14, c'est-à-dire la puissance du laser (bloc 50). On inverse cette dynamique obtenue pour obtenir la fonction de correction (bloc 51).

Dans une étape supplémentaire, on corrige la donnée graphique IM(x,y) à l'aide de la fonction de correction du bloc 51. On obtient alors une donnée graphique corrigée IM$_c$(x,y). C'est cette donnée graphique corrigée Im$_c$ (x, y) que l'on va écrire sur le support 20 grâce au dispositif d'écriture 1. La donnée graphique enregistrée est appelée *Im(x, y)*. Ensuite on peut venir lire le support 10 avec l'optique de collecte 9a'. On obtient une donnée graphique *Im' (x,y)* qu'il suffit d'échantillonner au pas de la maille 17 afin d'obtenir la donnée graphique IM'(x,y) qui est aussi proche que possible de la donnée graphique originale à enregistrer IM(x,y).

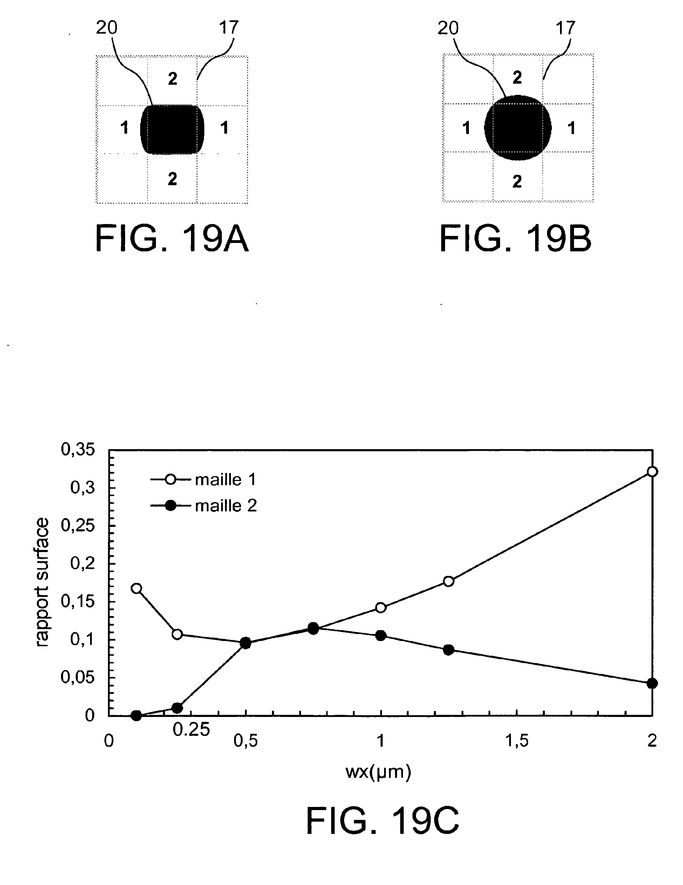

La dimension wx' du spot dans la direction du balayage va avoir une influence sur la forme du motif inscrit. Plus la dimension wx' sera petite, plus le motif inscrit sera rectangulaire (ou carré) comme illustré sur la figure 17A avec une valeur de wx' de 0,25 micromètre. Plus la dimension wx' sera petite plus le motif inscrit 20 sera circulaire comme sur la figure 19B avec une valeur de wx' de 1 micromètre.

Une forme rectangulaire ou carrée présente l'avantage que le motif, s'il occupe toute la surface de la maille, ne déborde pas trop sur les mailles voisines, et ne complique pas la détermination du niveau de gris lors de la lecture des données graphiques enregistrées.

Un motif circulaire présente l'avantage de donner une image récupérée plus douce.

Sur la figure 19C, on a représenté le rapport de surface occupée par un motif qui déborde sur une maille voisine, dénommée N°1 ou N°2 en fonction de la dimension wx' du spot qui sert à inscrire le motif. On suppose que les mailles font environ 1 micromètre de côté et que le support d'inscription est de type photosensible. Pour une dimension wx' inférieure à 0,25 micromètre, le pourcentage de débordement dans la maille 2 située dans la même colonne que la maille inscrite, est inférieure à 1%. Pour une dimension wx' égale à 0,5 micromètres, le pourcentage de débordement dans la maille 2 est de 10%. Dans les deux cas le pourcentage de débordement dans les mailles 1 situées sur la même ligne que la maille inscrite est supérieur ou égal à 10%.

En conclusion, si l'objectif de la sauvegarde est la préservation de la qualité des données, on optimise la reproduction de la dynamique des niveaux de gris. Pour cela on a intérêt à travailler avec un spot dont la dimension wx' est petite et vaut typiquement autour de 20% du côté d'une maille comme montré sur la figure 19A.

Au contraire, si l'objectif est de faire une sauvegarde esthétique à partir d'une image réduite en taille pour l'oeil, on choisira une dimension wx' pour le spot de l'ordre d'environ 50 à 75% du côté de la maille comme montré sur la figure 19B.

La présente invention propose une solution pour la sauvegarde de données graphiques adaptée aussi bien à la sauvegarde d'une grande quantité de données graphiques qu'à une sauvegarde fidèle des données graphiques. Ces deux objectifs sont contradictoires. En effet la valeur du côté de la maille va dépendre de l'objectif recherché.

Le pas minimum du spot du laser est égal au rapport de la vitesse linéaire sur la fréquence caractéristique du laser. Avec une fréquence caractéristique de 400 Mhz et une vitesse linéaire de 1 m/s, le pas minimum du spot du laser vaut 2,5 nanomètres. Pour pouvoir bénéficier de 256 niveaux de gris, une maille doit avoir un côté au minimum de 640 nanomètres. Plus la maille est petite plus on pourra enregistrer de données graphiques sur le support.

Pour un meilleur rendu esthétique, la taille de la maille sera adaptée à la résolution du dispositif de lecture des données graphiques enregistrées. Typiquement, le côté d'une maille pourra dépasser le micromètre.

Il faut noter également qu'avec des tailles de maille élevées, on peut obtenir des durées d'écriture plus petites, puisque le pas de la spirale parcourue par le laser, dans le cas de la sauvegarde sur un disque, est plus grand. Dans une application grand public du dispositif d'enregistrement, on aura donc intérêt à privilégier les tailles élevées des mailles.

Bien que plusieurs modes de réalisation de la présente invention aient été représentés et décrits de façon détaillée, on comprendra que différents changements et modifications puissent être apportés sans sortir du cadre des revendications.

## Revendications

**1.** Dispositif d'enregistrement de données graphiques (34) sur un support (10), chaque donnée graphique possédant des pixels pouvant prendre plusieurs niveaux de gris, comportant :

un laser (9) produisant un faisceau laser (14) auquel est sensible le support (10), ce faisceau laser (14) projetant un spot (25) sur le support (10), le laser (9) étant animé d'un mouvement de balayage relatif par rapport au support (10) lors de l'enregistrement,
des moyens de conversion du niveau de gris de chaque pixel en une taille de motif (20) à enregistrer sur le support (10),
des moyens pour mettre en forme (9a) le faisceau laser,
des moyens de réglage de la taille du motif (9b),
**caractérisé en ce que** les moyens pour mettre en forme (9a) rendent le spot (25) projeté sur le support (10) oblong avec une dimension dans la direction de balayage inférieure à une dimension dans une direction sensiblement perpendiculaire à la direction de balayage et les moyens de réglage de la taille du motif (9b) agissent sur l'allumage et l'extinction du laser (9) et éventuellement sur la puissance du faisceau laser (14).

**2.** Dispositif d'enregistrement selon la revendication 1, dans lequel les moyens pour mettre en forme (9a) le faisceau laser (14) comportent un dispositif de focalisation (13c) placé en aval du laser (9).

**3.** Dispositif d'enregistrement selon la revendication 2, dans lequel les moyens pour mettre en forme (9a) le faisceau laser (14) comportent un télescope cylindrique à au moins deux lentilles cylindriques (13a, 13b) de focales différentes, placé en aval du laser (9) et en amont du dispositif de focalisation (13c).

**4.** Dispositif d'enregistrement selon la revendication 3, dans lequel au moins une des lentilles cylindriques (13a, 13b) est interchangeable.

**5.** Dispositif d'enregistrement selon la revendication 2, dans lequel les moyens pour mettre en forme (9a) le faisceau laser (14) comportent un obturateur (27) placé en aval du laser (9) et du dispositif de focalisation (13c).

**6.** Dispositif d'enregistrement selon la revendication 1, dans lequel les moyens pour mettre en forme (9a) le faisceau laser (14) comportent au moins un élément aberrant (26) inclus dans le dispositif de focalisation (13c) .

**7.** Dispositif d'enregistrement selon l'une des revendications 1 à 6, comportant en outre, des moyens d'asservissement (40) de la position des moyens de mise en forme (9a) par rapport au support (10).

**8.** Dispositif d'enregistrement selon l'une des revendications 1 à 7, dans lequel les moyens de réglage de la taille du motif (9b) comportent des moyens de modulation du faisceau laser (9).

**9.** Dispositif d'enregistrement selon l'une des revendications 1 à 8, dans lequel des moyens de conversion du niveau de gris de chaque pixel en une taille de motif (20) à enregistrer comportent une table de conversion (33).

**10.** Dispositif d'enregistrement selon l'une des revendications précédentes, dans lequel chaque motif (20) est inscrit dans une maille (17) du support (10), les moyens de réglage de la taille du motif (20) réglant à la fois la durée d'allumage du laser (9) et le début de l'allumage de manière à ce que chaque motif (20) soit centré ou décentré dans la maille (17).

**11.** Dispositif d'enregistrement selon la revendication 10, dans lequel lorsque le motif (20) est décentré dans la maille (17), la taille du motif (20) traduit l'amplitude d'une transformée du niveau de gris et son décentrement la phase d'une transformée du niveau de gris.

**12.** Dispositif d'enregistrement selon l'une des revendications précédentes dans lequel les moyens de réglage de la taille du motif (9b) et/ou les moyens de conversion (32) prennent en compte la nature du support (10).

**13.** Dispositif d'enregistrement et de lecture de données graphiques (34) comportant un dispositif d'enregistrement selon l'une des revendications 1 à 12 et un dispositif de lecture des données graphiques (34) enregistrées par le dispositif d'enregistrement qui comporte un laser (9') destiné à irradier le support (10) avec un faisceau laser (14') et un dispositif optique de collecte (9a') du faisceau laser (14') ayant interagi avec le support (10), dans lequel les moyens pour corréler le niveau de gris de chaque pixel à une taille de motif (20) à enregistrer sur le support (10) prennent en compte une réponse percussionnelle du dispositif optique de collecte (9a').

**14.** Procédé d'enregistrement laser de données graphiques (34) sur un support (10) sensible à un faisceau laser (14) produit par le laser (9), chaque donnée graphique possédant des pixels pouvant prendre plusieurs niveaux de gris, dans lequel :

on détermine pour chaque pixel de la donnée graphique une taille de motif (20) à enregistrer sur le support (10), cette taille étant fonction du niveau de gris du pixel,
on entraîne le laser (9) et le support (10) dans un mouvement relatif de balayage,
**caractérisé en ce qu'**on met en forme le faisceau laser (14) de manière à ce qu' il projette un spot (25) oblong sur le support (10), ce spot (25) présentant une dimension dans la direction de balayage inférieure à une dimension dans une direction sensiblement perpendiculaire à la direction de balayage, et
on agit sur l'allumage et l'extinction du laser (9) et éventuellement sur la puissance du faisceau laser (14) pour que le motif (20) en cours d'enregistrement ait une taille voulue.

**15.** Procédé d'enregistrement selon la revendication 14, dans lequel on enregistre chaque motif (20) dans une maille (17) du support (10), les mailles (17) formant une succession, on règle l'allumage du laser (9) pour l'enregistrement d'un motif (20) dans une maille (17) donnée à partir d'un instant dans lequel le laser survole le centre de la maille (17) précédent la maille (17) donnée.

**16.** Procédé d'enregistrement selon la revendication 14 ou 15, dans lequel on règle la puissance du laser (9) pour ajuster la dimension du spot (25) dans la direction sensiblement perpendiculaire à la direction de balayage.

**Claims**

**1.** Device for recording graphical data (34) on a medium (10), each graphical data item having pixels that can take several grey levels, comprising:

a laser (9) producing a laser beam (14) to which the medium (10) is sensitive, this laser beam (14) projecting a spot (25) onto the medium (10), the laser (9) being driven in a relative sweeping movement with respect to the medium (10) during recording,

means of converting the grey level of each pixel into a pattern size (20) to be recorded on the medium (10), means (9a) for shaping the laser beam, means of adjusting the size of the pattern (9b), **characterised in that** the means for shaping (9a) cause the spot (25) projected on the medium (10) oblong with a dimension in the sweep direction smaller than a dimension in a direction substantially perpendicular to the sweep direction and the means of adjusting the size of the pattern (9b) act on the switching on and off of the laser and eventually on the power of the laser beam (14).

2. Recording device according to claim 1, in which the means (9a) for shaping the laser beam (14) comprise a focussing device (13c) placed downstream of the laser (9).

3. Recording device according to claim 2, in which the means (9a) for shaping the laser beam (14) comprise a cylindrical telescope with at least two cylindrical lenses (13a, 13b) with different focal lengths, placed downstream of the laser (9) and upstream of the focussing device (13c).

4. Recording device according to claim 3, in which at least one of the cylindrical lenses (13a, 13b) is exchangeable.

5. Recording device according to claim 2, in which the means (9a) for shaping the laser beam (14) comprise an obturator (27) placed downstream of the laser (9) and focussing device (13c).

6. Recording device according to claim 1, in which the means (9a) for shaping the laser beam (14) comprise at least one aberrant element (26) included in the focussing device (13c).

7. Recording device according to one of claims 1 to 6, also comprising means (40) of slaving the position of the shaping means (9a) with respect to the medium (10).

8. Recording device according to one of claims 1 to 7, in which the means of adjusting the size of the pattern (9b) comprise means of modulating the laser beam (9).

9. Recording device according to one of claims 1 to 8, in which means of converting the grey level of each pixel into a pattern size (20) to be recorded comprise a conversion table (33).

10. Recording device according to one of the preceding claims, in which each pattern (20) is inscribed in a mesh (17) on the medium (10), the means of adjusting the size of the pattern (20) adjusting both the period for which the laser (9) is switched on and the start of the switching on so that each pattern (20) is centred or decentred in the mesh (17).

11. Recording device according to claim 10, in which, when the pattern (20) is decentred in the mesh (17), the size of the pattern (20) represents the amplitude of a transform of the grey level and its decentring the phase of a transform of the grey level.

12. Recording device according to one of the preceding claims, in which the means of adjusting the size of the pattern (9b) and/or the conversion means (32) take into account the nature of the medium (10).

13. Device for recording and reading graphical data (34), comprising a recording device according to one of claims 1 to 12 and a device for reading the graphical data (34) recorded by the recording device that comprises a laser (9') intended to irradiate the medium (10) with a laser beam (14') and an optical device (9a') for collecting the laser beam (14') that has interacted with the medium (10), in which the means for correlating the grey level of each pixel with a pattern size (20) to be recorded on the medium (10) takes into account a percussional response of the optical collecting device (9a').

14. Laser recording method of graphical data (34) on a medium (10) sensitive to a laser beam (14) produced by the laser (9), each graphical data item having pixels that can take several grey levels, in which:

for each pixel of the graphical data item a pattern size (20) to be recorded on the medium (10) is determined, this size depending on the grey level of the pixel, the laser (9) and the medium (10) are driven in a relative sweeping movement, **characterised in that** the laser beam (14) is shaped so that it projects an oblong spot (25) on the medium (10), this spot (25) having a dimension in the sweep direction smaller than a dimension in a direction substantially perpendicular to the sweep direction,
the switching on and off of the laser (9) and eventually the power of the laser beam (14) are acted on so that the pattern (20) being recorded has the required size.

15. Recording method according to claim 14, in which each pattern (20) is recorded in mesh (17) on the medium (10), the meshes (17) forming a succession, the switching on of the laser (9) is adjusted for the recording of a pattern (20) in a given mesh (17) as from an instant in which the laser passes over the centre of the mesh (17) preceding the given mesh (17).

16. Recording method according to claim 14 or 15, in which the power of the laser (9) is regulated for adjusting the dimension of the spot (25) in the direction substantially perpendicular to the sweep direction.


**Patentansprüche**

1. Vorrichtung zur Registrierung bzw. Aufzeichnung graphischer Daten bzw. Vorgaben (34) auf einem Träger (10), wobei jedes graphische Vorgabedatum jeweils Pixel besitzt, welche mehrere Grau-Niveaus bzw. Grautöne annehmen können, die Vorrichtung umfassend:

   einen Laser (9) zur Erzeugung eines Laserstrahlbündels (14), für welchen der Träger (10) ansprechempfindlich ist, wobei der Laserstrahl (14) einen Leuchtfleck (25) auf den Träger (10) projiziert und der Laser (9) bei der Aufzeichnung zu einer Abtast-Relativbewegung bezüglich dem Träger (10) angetrieben wird,
   Mittel zur Umwandlung des Grauniveaus jedes Pixels in eine auf dem Träger (10) zu registrierende Motivabmessung (20),
   Mittel (9a) zur Formgebung des Laserstrahlbündels,
   Mittel (9b) zur Regelung bzw. Einstellung der Abmessung des Motivs,
   **dadurch gekennzeichnet, daß** die Formgebungsmittel (9a) den auf den Träger (10) projizierten Leuchtfleck (25) länglich gestalten, mit einer Abmessung in Richtung der Abtastung, die kleiner als eine Abmessung in einer zur Abtastrichtung im wesentlichen rechtwinkligen Richtung ist, und daß die Mittel (9b) zur Regelung bzw. Einstellung der Abmessung des Motivs auf die Zündung und die Löschung des Lasers (9) und gegebenenfalls auf die Leistung des Laserstrahlbündels (14) einwiren.

2. Vorrichtung zur Registrierung bzw. Aufzeichnung nach Anspruch 1, bei welcher die Mittel (9a) zur Formgebung des Laserstrahls (14) eine stromabwärts des Lasers (9) angeordnete Fokussierungsvorrichtung (13c) aufweisen.

3. Registrier- bzw. Aufzeichnungsvorrichtung nach Anspruch 2, bei welcher die Mittel (9a) zur Formgebung des Laserstrahls (14) ein Zylinderlin-senteleskop mit wenigstens zwei Zylinderlinsen (13a, 13b) unterschiedlicher Brennweiten umfassen, die stromabwärts des Lasers (9) und stromaufwärts der Fokussierungseinrichtung (13c) angeordnet sind.

4. Registrier- bzw. Aufzeichnungsvorrichtung nach Anspruch 3, bei welcher wenigstens eine der Zylinderlinsen (13a, 13b) auswechselbar bzw. austauschbar sind.

5. Registrier- bzw. Aufzeichnungsvorrichtung nach Anspruch 2, bei welcher die Mittel (9a) zur Formgebung des Laserstrahls (14) einen stromabwärts des Lasers (9) und der Fokussierungseinrichtung (13c) angeordneten Verschluß (27) umfassen.

6. Registrier- bzw. Aufzeichnungsvorrichtung nach Anspruch 1, bei welcher die Mittel (9a) zur Formgebung des Laserstrahls (14) wenigstens ein in der Fokussierungseinrichtung (13c) einbezogenes Aberrationselement umfassen.

7. Registrier-bzw. Aufzeichnungsvorruichtung nach einem der Ansprüche 1 bis 6, welche des weiteren Mittel zur Servosteuerung (40) der Stellung der Formgebungsmittel (9a) relativ bezüglich dem Träger (10) umfaßt.

8. Registrier- bzw. Aufzeichnungsvorrichtung nach einem der Ansprüche 1 bis 7, bei welcher die Mittel (9b) zur Regelung bzw. Einstellung der Abmessung des Motivs Mittel zur Modulation des Laserstrahlbündels (9) umfassen.

9. Registrier- bzw. Aufzeichnungsmittel nach einem der Ansprüche 1 bis 8, bei welcher die Mittel zur Umwandlung des Grauniveaus bzw. Grauwerts jedes Pixels in eine Abmessung des aufzuzeichnenden Motivs (20) eine Umwandlungstabelle (33) umfassen.

**10.** Registrier- bzw. Aufzeichnungsvorrichtung nach einem der vorhergehenden Ansprüche, bei welchem jeweils jedes Motiv (20) in eine Masche (17) des Trägers (10) eingeschrieben ist, wobei die Mittel zur Regelung der Abmessung des Motivs (20) gleichzeitig die Dauer der Zündung des Lasers (9) und den Beginn der Zündung so regelt, daß jedes Motiv jeweils in der Masche (17) zentriert bzw. dezentriert wird.

**11.** Registrier- bzw. Aufzeichnungsvorrichtung nach Anspruch 10, bei welcher, wenn das Motiv in der Masche (17) dezentriert ist, die Abmessung des Motivs (20) die Amplitude einer Transformierten des Grauniveaus abbildet und seine Dezentrierung die Phase einer Transformierten des Grauniveaus abbildet.

**12.** Registrier- bzw. Aufzeichnungsvorrichtung nach einem der vorhergehenden Ansprüche, bei welcher die Mittel (9b) zur Regelung der Abmessung des Motivs und / oder die Umwandlungsmittel (32) die Natur des Trägers berücksichtigen.

**13.** Vorrichtung zum Registrieren bzw. Aufzeichnen und zum Lesen von graphischen Vorgabedaten (34), welche eine Registrier-bzw. Aufzeichnungsvorrichtung nach einem der vorhergehenden Ansprüche 1 bis 12 sowie eine Vorrichtung zum Lesen der mittels der Registrier-bzw. Aufzeich-nungsvorrichtung aufgezeichneten graphischen Vorgabedaten umfaßt, weiche einen zum Bestrahlen des Trägers (10) mit einem Laserstrahl (14') bestimmten Laser (9') und eine optische Vorrichtung (9a') zur Aufnahme des Strahls (14') nach Wechselwirkung mit dem Träger (10) umfaßt, wobei bei dieser Vorrichtung die Mittel zur Korrelation des Grauniveaus jedes Pixels mit einer Abmessung eines auf dem Träger (10) aufzuzeichnenden Motivs (20) eine Stoß- bzw. Schlag-Antwort der optischen Aufnahmevorrichtung (9a') berücksichtigen.

**14.** Verfahren zur Laser-Aufzeichnung graphischer Vorgabedaten (34) auf einem Träger (10), der für einen durch den Laser (9) erzeugten Laserstrahl (14) empfindlich ist, wobei jeweils jedes graphische Vorgabedatum Pixel beseitzt, die mehrere Grau-Niveaus annehmen können, wobei man bei diesem Verfahren
für jedes Pixel des graphischen Vorgabedatums eine auf dem Träger (10) zu registrierende bzw. aufzuzeichnende Motivabmessung (20) bestimmt, die eine Funktion des Grau-Niveaus des Pixels ist,
den Laser (9) und den Träger (10) zu einer Abtast-Reiativbewegung veranlaßt, **dadurch gekennzeichnet, daß** main dem Laserstrahlbündel (14) eine solche Form gibt, daß der Strahl einen länglichen Leuchtfleck (25) auf den Träger (10) projiziert, derart daß der Leuchtfleck (25) in der Abtastrichtung eine Abmessung besitzt, die kleiner als die Abmessung in der zur Abtastrichtung im wesentlichen rechtwinkligen Richtung ist, und
daß man auf die Zündung and Löschung des Lasers (9) und gegebenenfalls auf die Leistung bzw, Intensität des Laserstrahls (14) so einwirkt, daß das in Aufzeichnung befindliche Motiv (20) eine gewünschte Größe annimmt.

**15.** Registrier- bzw. Aufzeichnungsverfahren nach Anspruch 14, bei welchem man jedes Motiv (20) jeweils in einer Masche (17) des Trägers aufzeichnet, wobei die Maschen eine Folge bilden, daß man die Zündung des Lasers (9) für die Aufzeichnung eines Motivs (20) in einer gegebenen Masche (17) ausgehend von einem Zeitpunkt regelt, in welchem der Laser die Mitte des der betreffenden Masche (17) vorhergehenden Masche (17) überstreicht.

**16.** Registrier- bzw. Aufzeichnungsverfahren nach Anspruch 14 oder 15, bei welchem man die Leistung des Lasers (9) regelt, um die Abmessung des Leuchtflecks in der zur Abtastrichtung im wesentlichen rechtwinkligen Richtung einzustellen.

FIG. 1A

FIG. 1B

FIG. 2

EP 2 172 933 B1

FIG. 3A

FIG. 3B

FIG. 4A

FIG. 4B

## FIG. 5A

## FIG. 5B

FIG. 6

FIG. 7

FIG. 8

FIG. 9

## FIG. 10

FIG. 11

FIG. 12

FIG. 13

FIG. 14

FIG. 15

FIG. 16A

FIG. 16B

FIG. 16C

FIG. 17

FIG. 18

FIG. 19A          FIG. 19B

FIG. 19C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3319518 A
- US 6442296 B
- EP 1310950 A2
- US 2005046817 A, Wolfe

**Littérature non-brevet citée dans la description**

- **B. R. Brown ; A. Lohmann.** Complex Spatial Filtering with Binary Masks. *Applied Optics,* vol. 5 (6), 967-969